# EUROPÄISCHE PATENTSCHRIFT

(11) **EP 1 854 619 B1**
(45) Veröffentlichungstag und Bekanntmachung des Hinweises auf die Patenterteilung: **10.04.2013**
(21) Anmeldenummer: 07002374.2
(22) Anmeldetag: 03.02.2007
(51) Int. Cl.: B29C 65/18, B29C 65/00, B65B 7/16

(54) **Siegelwerkzeug zum Siegeln von Folien in einer Siegelstation**
Sealing tool for sealing foils in a sealing station
Outil de soudage pour souder des feuilles dans une station de soudage

(30) Priorität: 11.05.2006 DE 102006022264
(43) Veröffentlichungstag der Anmeldung: 14.11.2007
(73) Patentinhaber: UHLMANN PAC-SYSTEME GmbH & Co. KG, 88471 Laupheim (DE)
(72) Erfinder: Felk, Günter, 89079 Ulm-Einsingen (DE); Krahl, Wolfgang, 88471 Laupheim (DE)
(74) Vertreter: Wächter, Jochen

(56) Entgegenhaltungen:
- WO-A-2004/073960
- DE-A1- 2 228 094
- GB-A- 643 219
- JP-A- 61 072 524
- US-A1- 2004 150 135

## Beschreibung

Die Erfindung betrifft ein Siegelwerkzeug zum Siegeln von Folien in einer Siegelstation, insbesondere in einer Thermoformmaschine, mit einer temperierbaren Trägerplatte und einer Siegelplatte, die an der Trägerplatte auf der den Folien zugewandten Seite angeordnet ist.

Ein derartiges Siegelwerkzeug ist aus der WO 2004/073960 A1 bekannt. Ein Nachteil dieses in Sandwichbauweise mit einer Trägerplatte, einer Siegelplatte und einer zur Vermeidung eines Bimetalleffekts der Trägerplatte zugeordneten Ausgleichsplatte gefertigten Siegelwerkzeugs ist, dass trotz der aufwendigen Konstruktion die im Betrieb trotzdem auftretenden Wärmespannungen zu unerwünschten Verformungen des Siegelwerkzeugs führen, welche die Siegelgüte negativ beeinflussen können. Außerdem ist es erforderlich, die drei Platten fest miteinander zu verschrauben und zu schleifen, so dass nach Erreichen der Verschleißgrenze der Siegelplatte das gesamte Siegelwerkzeug ersetzt werden muss.

Aufgrund des hohen Materialeinsatzes sind die Siegelwerkzeuge zudem außerordentlich schwer und daher nur schlecht handhabbar.

Die GB 643 219 A beschreibt eine Siegelplattenkonstruktion für die Verschweißung von thermoplastischen Folien mit Hilfe von HF-Erwärmung, bei der die Siegelplatte an einer Trägerplatte mit Abstand angeordnet ist, der durch eine Art Spitzen- oder Punktlager zwischen den beiden Elementen bestimmt wird. Die Sicherung der Siegelplatte an der Trägerplatte erfolgt durch mehrere Schrauben, die die Trägerplatte lose durchdringen und in die Siegelplatte geschraubt sind. Erste Federn drücken die Siegelplatte von der Trägerplatte weg. Sich an den Schraubenköpfen abstützende zweite Federn ziehen die Siegelplatte auf das Spitzenlager. Diese Konstruktion dient dem Zweck, die Siegelplatte gegenüber der Trägerplatte in beliebigen Ebenen geringfügig neigbar zu machen, um Ungleichmäßigkeiten der Dicke der zu versiegelnden Folien ausgleichen zu können. Spezielle Federwerte sind nicht notwendig, solange.nur das Zusammenwirken der Federn die Siegelplatte in Ruhelage in einer Zwischenstellung hält, die nicht einmal parallel zur ihr gegenüber stehenden Gegensiegelplatte zu sein braucht.

Die DE 22 28 094 A1 zeigt einen mehrschichtigen Aufbau eines Schweißstempels, bei dem eine flexible Schweißplatte unter Zwischenschaltung eines flächenförmigen Heizelements und einer elastischen Zwischenlage mittels Schrauben an einer Trägerplatte befestigt ist, wobei zwischen der Trägerplatte und den Schraubenköpfen Spannfedern eingefügt sind. Durch die Flexibilität der Schweißplatte in Kombination mit der Flexibilität der sie auf der starren Trägerplatte abstützenden Zwischenlage ist es möglich, durch Wärmedehnungen entstehende Verwerfungen der Siegelfläche der Schweißplatte durch den beim Siegeln herrschenden Anpressdruck zu beseitigen, so dass die Schweißplatte vollflächig auf der zu verschweißenden Folie aufliegt. Zugleich lässt sich damit auch das oben erläuterte Problem der Foliendickenschwankungen lösen.

Der Erfindung liegt die Aufgabe zugrunde, ein Siegelwerkzeug der eingangs genannten Art so auszugestalten, dass es die oben erwähnten Nachteile nicht aufweist.

Diese Aufgabe wird durch die in Anspruch 1 angegebene Erfindung gelöst. Weiterbildungen derselben sind Gegenstand der Unteransprüche.

Mit diesem Siegelwerkzeug ist der Vorteil verbunden, dass zu dessen Fertigung nur noch zwei Bauteile notwendig sind, die zudem unabhängig voneinander hergestellt werden können. Die einzelnen Siegelwerkzeuge haben ein deutlich verringertes Gewicht. Als weiterer Vorteil kann bei diesem Siegelwerkzeug eine mit der Temperierung einher gehende Wärmeausdehnung der Siegelplatte und der Trägerplatte ungehindert erfolgen, wobei konstruktionsbedingt keine Wärmespannungen innerhalb des Siegelwerkzeugs generiert werden, weil eine "weiche" Verbindung mit konstruktiv determinierter Anpresskraft der Trägerplatte und der Siegelplatte gegeben ist. Hierdurch wird eine Verformung des Siegelwerkzeugs, die die Siegelgüte negativ beeinflusst, auf einfache Weise vermieden. Ein weiterer Vorteil besteht darin, dass die Siegelplatte durch definierte Anlage an die Trägerplatte durch diese gleichmäßig temperiert wird, was wiederum ein weiter verbessertes Siegelbild zur Folge hat. Überdies wird eine exakte Ausrichtung der Siegelplatten der sich einander gegenüberstehenden Siegelwerkzeuge einer Siegelstation deutlich erleichtert.

Erfindungsgemäß ist es vorgesehen, dass die Trägerplatte und die Siegelplatte gegenseitig zur Anlage mit vorbestimmter Anpresskraft gebracht sind durch zumindest zwei lösbare Schrauben, wobei der Schraubenkopf unter Zwischenschaltung einer elastischen Komponente an der den Folien abgewandten Seite der Trägerplatte abgestützt ist und der Schraubenschaft einen Zylinderabschnitt mit einem gegenüber der Bohrung in der Trägerplatte kleineren Durchmesser aufweist und an seinem freien Ende einen in eine Gewindebohrung der Siegelplatte zum Eingriff kommenden Gewindeabschnitt aufweist. Dies hat den Vorteil, dass die Anpresskraft der Siegelplatte an die Trägerplatte auf einfache Weise eingestellt werden kann durch die Federkraft der elastischen Komponente und zugleich die Wärmeausdehnung der Siegel- und Trägerplatte voneinander unabhängig und ungehindert erfolgen kann. Zudem wird ein einfacher Austausch der Siegelplatte im Falle eines Formatwechsels oder bei Verschleiß auf einfache Weise ermöglicht.

Gemäß einer bevorzugten Ausführungsform besteht die elastische Komponente aus einer Druckfeder und/oder aus einem Elastomer. In Abhängigkeit von deren Eigenschaften wird die Vorgabe eines Intervalls der Anpresskraft, mit der die Siegelplatte gegen die Trägerplatte zur Anlage gebracht wird, realisiert.

Im Rahmen einer Weiterbildung der Erfindung ist weiterhin vorgesehen, dass die Schrauben einen Zylinderabschnitt mit einem gegenüber dem Gewindeabschnitt größeren Durchmesser aufweisen und die Länge des Zylinderabschnitts die Stärke der Trägerplatte übersteigt. Diese Ausgestaltung verhindert ein zu tiefes Eindrehen der Schrauben in die zugeordnete Gewindebohrung und damit ein vollständiges Zusammendrücken der elastischen Komponente, bei dem der Schraubenkopf in der Kraftübertragungskette direkt auf die Trägerplatte ungefedert einwirkt, wodurch die Funktion der elastischen Komponente aufgehoben wäre.

Um Scherbewegungen durch Kräfte, die die Reibungskräfte zwischen den Platten übersteigen, zu vermeiden, ist vorgesehen, dass die Siegelplatte an der Trägerplatte mittels einer Ein-Punkt-Fixierung ausgerichtet ist.

In bevorzugter Ausführungsform der Erfindung ist die Ein-Punkt Fixierung durch einen im Zentrum der der anderen Platte zugewandten Fläche der Siegel- oder Trägerplatte angeordneten Stift oder Bolzen realisiert, der formschlüssig in eine Aussparung auf der dem Stift oder Bolzen gegenüberstehenden Seite der anderen Platte eingreift. Dies hat den Vorteil, dass die Siegelplatte reproduzierbar und auf einfache sowie schnelle Weise auf der Trägerplatte ausgerichtet werden kann. Bei entsprechender Ausrichtung der Siegelplatte auf dem korrespondierenden Siegelwerkzeug wird so eine definierte Ausrichtung der beiden Siegelplatten zueinander ermöglicht.

In bevorzugter Ausführungsform der Erfindung ist dezentral auf der der anderen Platte zugewandten Fläche der Siegel- oder Trägerplatte zumindest ein Stift oder Bolzen angeordnet, der in ein Langloch auf der dem Stift oder dem Bolzen gegenüberstehenden Seite der anderen Platte eingreift. Hierdurch wird eine weitere Erleichterung der Ausrichtung der Siegelplatte auf der Trägerplatte ermöglicht, wobei eine ungehinderte Wärmeausdehnung der Siegelplatte und der Trägerplatte gewährleistet ist.

Besonders bevorzugt ist es, wenn die Trägerplatte aus einem Werkstoff mit hoher Wärmeleitfähigkeit gefertigt ist. Hierdurch wird gewährleistet, dass die Trägerplatte mit geringer thermischer Trägheit an jedem Punkt dieselbe Temperatur aufweist und somit auch die zugeordnete Siegelplatte zügig und gleichmäßig temperiert wird. Zweckmäßigerweise kann die Trägerplatte aus Aluminium oder einer Aluminiumlegierung gefertigt sein. Dies ermöglicht zum einen eine wirtschaftliche Fertigung des Bauteils, zum anderen wird eine deutliche Reduktion des Gewichts des Siegelwerkzeugs und damit eine verbesserte Handhabbarkeit desselben ermöglicht.

Weiterhin ist es von besonderem Vorteil, wenn die Siegelplatte, die hohen thermischen und mechanischen Belastungen unterliegt, aus einem Werkstoff mit hoher Verschleißfestigkeit gefertigt ist. Dies verlängert die maximal mögliche Betriebszeit dieses Bauteils und stellt somit einen Kostenvorteil dar. Die Anfertigung der Siegelplatte aus Stahl eröffnet durch die Möglichkeit der Härtung und Oberflächenvergütung eine extrem hohe Verschleißfestigkeit. Die ausreichend hohe Wärmeleitfähigkeit dieses Materials erlaubt zudem eine zügige und gleichmäßige Temperierung des Bauteils im Betrieb.

In bevorzugter Ausführungsform der Erfindung sind in der Trägerplatte parallel zur Oberfläche Aussparungen angeordnet. Dies ermöglicht das Einbringen von Heizpatronen, temperierten Flüssigkeiten oder dergleichen zur schnellen und gleichmäßigen Temperierung der Trägerplatte.

Zweckmäßigerweise weist die Siegelplatte auf der den Folien zugewandten Seite Riffel oder formatabhängige Konturen auf.

Im folgenden wird die Erfindung an in der Zeichnung dargestellten Ausführungsbeispielen näher erläutert; es zeigen:
- Fig. 1: ein oberes Siegelwerkzeug in perspektivischer Schrägansicht,
- Fig. 2: das Siegelwerkzeug aus Fig. 1 im Querschnitt,
- Fig. 3: das Detail III aus Fig. 2,
- Fig. 4: eine perspektivische Schrägansicht auf die Siegelplatte eines unteren Siegelwerkzeugs mit eingearbeiteten Konturen, und
- Fig. 5: das Siegelwerkzeug aus Fig. 4 im Querschitt.

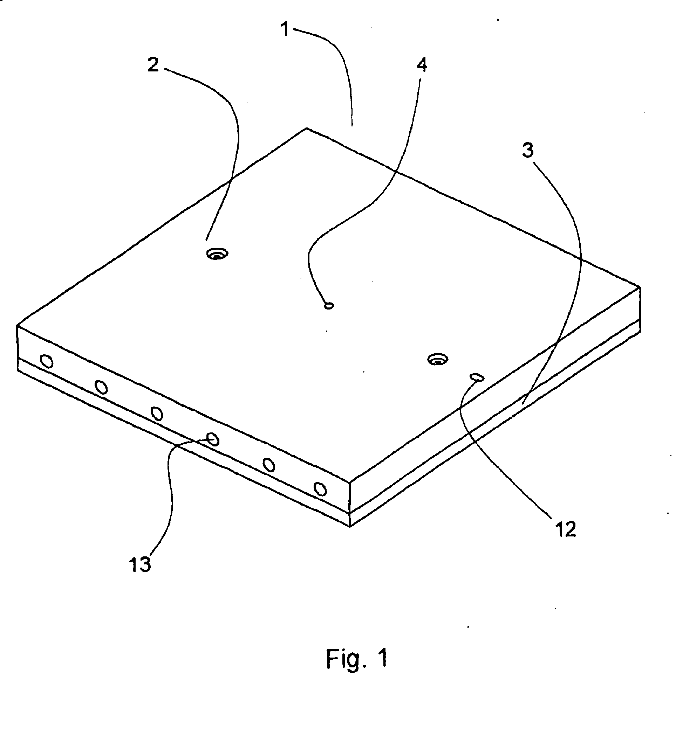

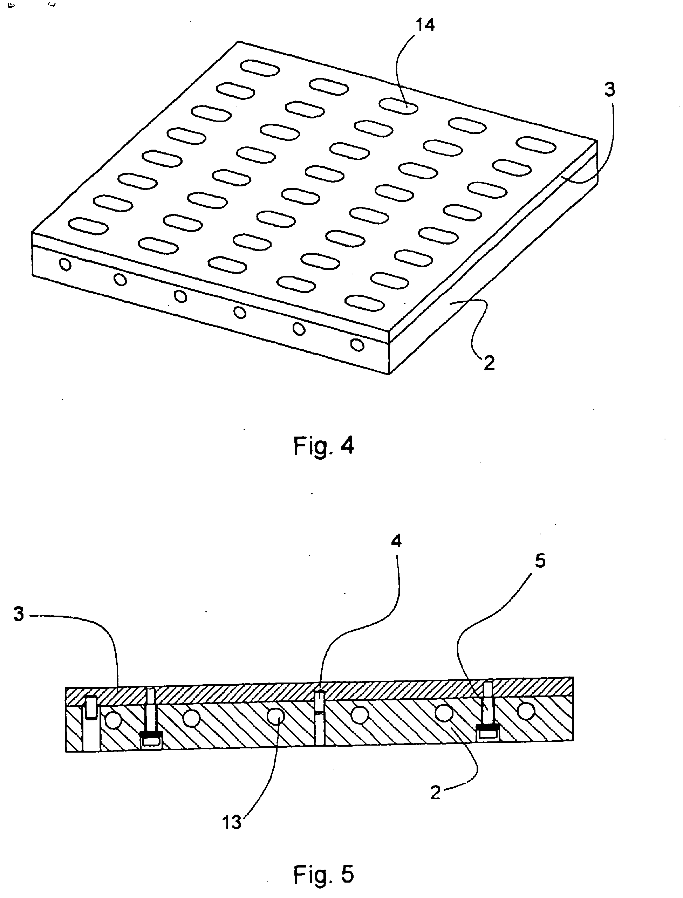

Das in der Zeichnung in Figur 1 dargestellte obere Siegelwerkzeug 1 ist vorgesehen zum Siegeln von Folien durch das paarweise Zusammenwirken mit einem unteren Siegelwerkzeug (Fig. 4) in einer Siegelstation, insbesondere in einer Thermoformmaschine. Jedes Siegelwerk weist eine temperierte Trägerplatte 2 und eine Siegelplatte 3 auf, die an der Trägerplatte 2 auf der den Folien zugewandten Seite mittels zumindest einer Ein-Punkt Fixierung 4 ausgerichtet ist und die durch eine konstruktiv vorbestimmte elastische Kraft gegenseitig zur Anlage gebracht sind. Dieser zweischichtige Aufbau eines Siegelwerkzeugs 1 ist mit einer einfachen Fertigung der Einzelteile und einer leichten Montage verbunden. Vorteil der durch eine elastische Kraft gegenseitig zur Anlage gebrachten Siegelplatte 3 und Trägerplatte 2 ist, dass die mit der Temperierung des Siegelwerkzeugs 1 verbundene Wärmeausdehnung der einzelnen Bauelemente ungehindert erfolgen und es nicht zur Entstehung von Wärmespannungen innerhalb des Siegelwerkzeugs 1 kommen kann. Infolgedessen wird die Entstehung einer unerwünschten Welligkeit der der Folie zugewandten Siegelplattenoberfläche, sowie eine Flexion oder Verwindung des Siegelwerkzeugs 1 unterdrückt. Hieraus ergibt sich eine Steigerung der Siegelgüte, die an der Gleichmäßigkeit des Siegelbilds zu erkennen ist. Die Ein-Punkt Fixierung 4 der Siegelplatte 1 auf der Trägerplatte 2 ermöglicht zudem eine exakte Ausrichtung der Siegelplatte 3 auf der Trägerplatte 2 und damit eine spiegelbildliche Anordnung der Siegelplatte 3 zur Siegelplatte 3 des funktionell komplementären zweiten Siegelwerkzeugs in der Siegelmaschine.

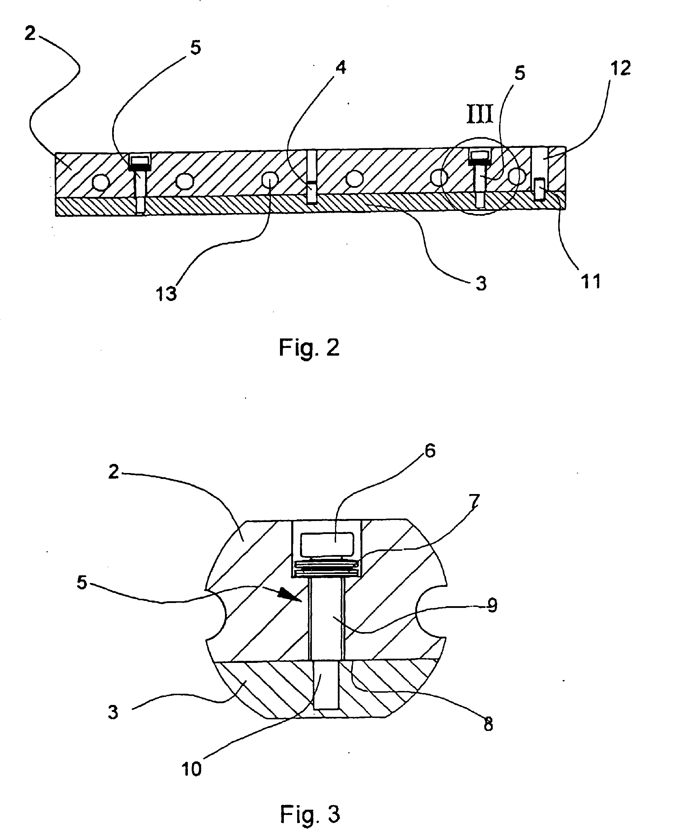

Wie insbesondere aus den Fig. 2 und 3 zu erkennen ist, sind die Trägerplatte 2 und die Siegelplatte 3 gegenseitig zur Anlage gebracht durch zwei lösbare Schrauben 5, die bei Bedarf naturgemäß durch weitere Schrauben ergänzt werden können, wobei der Schraubenkopf 6 unter Zwischenschaltung einer elastischen Komponente 7, nämlich einer Druckfeder an der den Folien abgewandten Seite der Trägerplatte 2 an der Schulter 8 einer größeren Vorbohrung abgestützt ist und der Schraubenschaft einen Zylinderabschnitt 9 mit einem gegenüber der Bohrung in der Trägerplatte 2 kleineren Durchmesser aufweist und an seinem freien Ende einen in eine Gewindebohrung der Siegelplatte 3 zum Eingriff kommenden Gewindeabschnitt 10 aufweist. Hierbei wird die Anpresskraft, mit der die Siegelplatte 3 an die Trägerplatte 2 zur Anlage gebracht wird, durch die unter dem Eindrehen der Schraube 5 in Vorspannung gebrachte elastische Komponente 7 determiniert. Der Vorteil besteht darin, dass zum einen eine gleichmäßige Anlage der Siegelplatte 3 an die Trägerplatte 2 und hiermit eine gleichmäßige Temperierung der Siegelplatte 3 durch die temperierte Trägerplatte 2 erfolgen kann. Überdies wird durch das Einbringen der elastischen Komponente 7 sowie das vorhandene Spiel des Zylinderabschnitts 9 in der zugeordneten Bohrung der Trägerplatte 2 eine ungehinderte Wärmeausdehnung der einzelnen Bauelemente ermöglicht und so das Entstehen von Wärmespannungen innerhalb des Siegelwerkzeugs 1 vermieden. Gemäß einer geeigneten Weiterbildung der Erfindung kann die elastische Komponente 7 auch aus einem Elastomer, wie z.B. einer Gummimuffe oder dergleichen gebildet sein.

Eine weitere besonders bevorzugte Ausgestaltungsform ist dadurch gekennzeichnet, dass die Schrauben 7 einen Zylinderabschnitt 9 mit einem gegenüber dem Gewindeabschnitt 10 größeren Durchmesser aufweisen und die Länge des Zylinderabschnitts 9 in Abhängigkeit von der Stärke der Trägerplatte 2 vorgegeben ist. Durch dieses Merkmal wird ein zu tiefes Eindrehen der Schraube 5 in die zugeordnete Gewindebohrung der Siegelplatte 3 verhindert, wodurch in der Folge ein komplettes Festsetzen der elastischen Komponente 7 und der damit verbundene Funktionsverlust dieses Bauteils vermieden wird.

Wie insbesondere aus Fig. 2 zu ersehen ist, ist in dem hier dargestellen Ausführungsbeispiel die Ein-Punkt Fixierung 4 durch einen im Zentrum der der anderen Platte zugewandten Fläche der Siegelplatte 3 oder Trägerplatte 3, 2 angeordneten Stift realisiert, der formschlüssig in eine Aussparung auf der dem Stift gegenüberstehenden Seite der anderen Platte eingreift. Diese Ein-Punkt Fixierung 4 kann aus einem Bolzen, einer Schraube oder dergleichen gebildet sein. Wie in diesem Ausführungsbeispiel gezeigt, ist dezentral auf der der anderen Platte zugewandten Fläche der Siegelplatte 3 ein weiterer Stift 11 angeordnet, der in ein Langloch 12 auf der dem Stift 11 gegenüberstehenden Seite der Trägerplatte 2 eingreift. Durch diesen weiteren Stift 11 wird eine exakte Positionierung der Siegelplatte 3 auf der Trägerplatte 2 ermöglicht und hierdurch eine entsprechende Ausrichtung zur Siegelplatte 3 des anderen Siegelwerkzeugs 1 ermöglicht.

Erfindungsgemäß ist es besonders bevorzugt, wenn die Trägerplatte 2 aus einem Werkstoff mit hoher Wärmeleitfähigkeit, wie z. B. aus Aluminium oder einer Aluminiumlegierung gefertigt ist. Dies ermöglicht eine schnelle und gleichmäßige Temperierung der gesamten Trägerplatte 2 und, konstruktionsbedingt, eine vergleichbare Temperierung der Siegelplatte 3. Diese Siegelplatte 3 wird erfindungsgemäß aus einem Werkstoff mit hoher Verschleißfestigkeit, z. B. Stahl, gefertigt. Durch Härten und weitere Vergütung des Werkstoffs können außerordentlich lange Einsatzzeiten ermöglicht werden und dadurch die Betriebskosten entscheidend gesenkt werden.

Wie insbesondere aus Fig. 2 zu ersehen ist, sind in der Trägerplatte 2 parallel zur Oberfläche Aussparungen 13 angeordnet, die ein Einbringen von Heizpatronen, Flüssigkeiten und dergleichen zum Zwecke der Temperierung der Trägerplatte 2 ermöglichen. Erfindungsgemäß kann die Siegelplatte 3 auf der den Folien zugewandten Seite Riffel oder formatabhängige Konturen 14 aufweisen. In der Praxis werden in einer Siegelstation üblicherweise zwei Siegelwerkzeuge 1 eingestezt, von denen das eine an seine den Folien zugewandten Oberfläche Riffel, das andere formatabhängige Konturen 14 aufweist. Da gerade diese Riffel und formatabhängigen Konturen 14 hohen mechanischen und thermischen Belastungen ausgesetzt sind, ist es von besonderem Vorteil, dass zur Instandsetzung des Siegelwerkzeugs 1 die Siegelplatte 3 separat von der Trägerplatte 2 ausgetauscht werden kann.

## Patentansprüche

1. Siegelwerkzeug zum Siegeln von Folien in einer Siegelstation, insbesondere in einer Thermoformmaschine, mit einer Trägerplatte (2) und einer Siegelplatte (3), die an der Trägerplatte (2) auf der den Folien zugewandten Seite angeordnet ist, wobei die Anpresskraft der Siegelplatte (3) an die Trägerplatte (2) durch die Verbindung der Siegelplatte (3) mit der Trägerplatte (2) vorbestimmt ist, wobei
die Trägerplatte (2) und die Siegelplatte (3) gegenseitig durch zumindest zwei lösbare Schrauben (5) zur Anlage gebracht sind, wobei der Schraubenkopf (6) unter Zwischenschaltung einer elastischen Komponente (7) auf der den Folien abgewandten Seite der Trägerplatte (2) abgestützt ist und der Schraubenschaft einen Zylinderabschnitt (9) mit einem gegenüber der Bohrung in der Trägerplatte (2) kleineren Durchmesser aufweist und an seinem freien Ende einen in eine Gewindebohrung der Siegelplatte (3) zum Eingriff kommenden Gewindeabschnitt (10) aufweist.

2. Siegelwerkzeug nach Anspruch 1, **dadurch gekennzeichnet, dass** die elastische Komponente (7) aus einer Druckfeder und/oder einem Elastomer besteht.

3. Siegelwerkzeug nach Anspruch 1 oder 2, **dadurch gekennzeichnet, dass** der Zylinderabschnitt (9) einen gegenüber dem Gewindeabschnitt (10) größeren Durchmesser aufweist und die Länge des Zylinderabschnitts (9) die Stärke der Trägerplatte (2) übersteigt.

4. Siegelwerkzeug nach einem das vorangehenden Ansprüche, **dadurch gekennzeichnet, dass** die Siegelplatte (3) an der Trägerplatte (2) mittels einer Ein-Punkt-Fixierung (4) ausgerichtet ist.

5. Siegelwerkzeug nach Anspruch 4, **dadurch gekennzeichnet, dass** die Ein-Punkt-Fixierung (4) durch einen im Zentrum der der anderen Platte zugewandten Fläche der Siegelplatte (3) oder Trägerplatte (2) angeordneten Stift oder Bolzen realisiert ist, der formschlüssig in eine Aussparung auf der dem Stift oder Bolzen gegenüberstehenden Seite der anderen Platte eingreift.

## Claims

1. Sealing tool for sealing films in a sealing station, in particular in a thermoforming machine, comprising a carrier plate (2) and a sealing plate (3), which is arranged on the carrier plate (2) on the side facing the films, wherein the contact pressure of the sealing plate (3) onto the carrier plate (2) is predetermined by the connection of the sealing plate (3) to the carrier plate (2), wherein the carrier plate (2) and the sealing plate (3) are attached to each other by at least two detachable screws (5), wherein the screw head (6) is supported on the side of the carrier plate remote from the films by the interposition of a resilient component (7), and the screw shaft comprises a cylindrical portion (9) having a smaller diameter in relation to the hole in the carrier plate (2) and comprises, on the free end thereof, a threaded portion (10) which engages in a threaded hole of the sealing plate (3).

2. Sealing tool according to claim 1, **characterised in that** the resilient component (7) consists of a compression spring and/or an elastomer.

3. Sealing tool according to either claim 1 or claim 2, **characterised in that** the cylindrical portion (9) has a greater diameter in relation to the threaded portion (10) and the length of the cylindrical portion (9) exceeds the thickness of the carrier plate (2).

4. Sealing tool according to any of the preceding claims, **characterised in that** the sealing plate (3) is oriented on the carrier plate (2) by means of a single-point fixing (4).

5. Sealing tool according to claim 4, **characterised in that** the single-point fixing (4) is achieved by a pin or bolt which is arranged in the centre of the surface of the sealing plate (3) or carrier plate (2) facing the other plate and engages with a positive fit in a relief on the side of the other plate which is opposite the pin or bolt.

## Revendications

1. Outil de soudage pour le soudage de feuilles dans un poste de soudage, en particulier dans une machine de thermoformage, comprenant une plaque support (2) et une plaque de soudage (3), disposée sur la plaque support (2) sur le côté tourné vers les feuilles, la force de serrage de la plaque de soudage (3) sur la plaque support (2) étant prédéfinie par l'assemblage de la plaque de soudage (3) avec la plaque support (2), la plaque support (2) et la plaque de soudage (3) étant amenées en contact mutuel par au moins deux vis (5) amovibles, la tête de vis (6) s'appuyant, avec intercalation d'un composant élastique (7), sur le côté de la plaque support (2) opposé aux feuilles, et la tige de vis présentant une section cylindrique (9) de diamètre plus petit que l'alésage dans la plaque support (2) et, sur son extrémité libre, une section filetée (10) qui entre en prise dans un taraudage de la plaque de soudage (3).

2. Outil de soudage selon la revendication 1, **caractérisé en ce que** le composant élastique (7) est constitué d'un ressort de pression et/ou d'un élastomère.

3. Outil de soudage selon l'une des revendications 1 et 2, **caractérisé en ce que** la section cylindrique (9) présente un diamètre plus grand que la section filetée (10), et la longueur de la section cylindrique (9) dépasse l'épaisseur de la plaque support (2).

4. Outil de soudage selon l'une des revendications précédentes, **caractérisé en ce que** la plaque de soudage (3) est alignée sur la plaque support (2) au moyen d'une fixation en un point (4).

5. Outil de soudage selon la revendication 4, **caractérisé en ce que** la fixation en un point (4) est réalisée par une broche ou un goujon, disposé au centre de la surface, tournée vers l'autre plaque, de la plaque de soudage (3) ou de la plaque support (2), lesquels s'engagent par coopération de forme dans un évidement sur le côté de l'autre plaque, opposé la broche ou au goujon.
